# FASCICULE DE BREVET EUROPEEN

(11) **EP 2 240 884 B1**
(45) Date de publication et mention de la délivrance du brevet: **22.11.2017**
(21) Numéro de dépôt: 09719277.7
(22) Date de dépôt: 12.02.2009
(51) Int. Cl.: G06K 9/20, G07C 9/00

(54) **DISPOSITIF D'ACQUISITION D'EMPREINTES DIGITALES A LA VOLEE**
EINRICHTUNG ZUM BESCHAFFEN VON FINGERABDRÜCKEN IM FLUGE
DEVICE FOR ACQUIRING FINGERPRINTS ON THE FLY

(30) Priorité: 14.02.2008 FR 0800802
(43) Date de publication de la demande: 20.10.2010
(73) Titulaire: MORPHO, 92130 Issy-Les-Moulineaux (FR)
(72) Inventeur: FOURRE, Joël-Yann, F-75015 Paris (FR); PICARD, Sylvaine, F-75015 Paris (FR); RIEUL, François, F-75015 Paris (FR); FONDEUR, Jean-Christophe, F-75015 Paris (FR)
(74) Mandataire: Lavialle, Bruno François Stéphane
(86) Numéro de dépôt international: PCT/FR2009/000157
(87) Numéro de publication internationale: WO 2009/112717

(56) Documents cités:
- EP-A- 1 612 717
- WO-A-2007/050776
- DE-A1-102004 053 927
- JP-A- 2007 310 429
- GUAN C ET AL: "Composite Structured Light Pattern for Three-Dimensional Video", OPTICS EXPRESS, OSA (OPTICAL SOCIETY OF AMERICA), WASHINGTON DC, (US), vol. 11, no. 5, 10 March 2003 (2003-03-10) , pages 406-417, XP007911203, ISSN: 1094-4087

## Description

La présente invention concerne un dispositif d'acquisition d'images des motifs formés par les sillons de la peau des doigts ou de la paume de la main (couramment appelés empreintes digitales ou palmaire).

Une identification par empreinte digitale comprend une phase d'acquisition d'une image d'au moins une empreinte digitale du candidat à l'identification et une phase de traitement de cette image pour permettre sa comparaison à des images d'empreintes digitales, ou à des représentations de ces empreintes traitées pour en faire ressortir les caractéristiques (représentations appelées gabarits), stockées dans une base de données avec l'identité du propriétaire de chacune d'entre elles.

Les techniques d'identifications au moyen d'empreintes digitales, largement utilisées dans le cadre des enquêtes policières, tendent à être de plus en plus utilisées pour le contrôle des frontières ou pour les simples contrôles d'identité par exemple à l'entrée de lieux à accès règlementé comme les aéroports, les entreprises...

Cet accroissement du champ d'application de ces techniques résulte notamment de l'amélioration des dispositifs d'acquisition des images d'empreintes digitales et des systèmes de traitement de l'image qui leur sont associés ; ainsi que de la baisse des coûts des moyens informatiques nécessaires à leur mise en oeuvre.

Dans ces nouvelles applications, les dispositifs d'acquisition sont utilisés par des personnes non formées à leur utilisation et sans aide d'un opérateur qualifié. En outre, dans certaines applications telles que le contrôle à la frontière un rejet peut être très pénalisant et nécessiter dans ce cas une vérification par une personne spécialisée augmentant alors la durée du contrôle. L'ergonomie du dispositif d'acquisition doit donc être particulièrement soignée en vue d'éviter une mauvaise utilisation. Pour améliorer la fiabilité de la vérification, il a également été envisagé d'effectuer l'identification à partir de plusieurs empreintes digitales.

L'amélioration des procédés de traitement combinée à l'augmentation de la puissance de calcul des moyens informatiques a permis de réduire le temps de traitement qui devient négligeable par rapport au temps d'acquisition, en particulier lorsque l'identification requiert l'acquisition d'images de plusieurs empreintes digitales (de plusieurs doigts différents).

L'acquisition est généralement réalisée au moyen d'un dispositif comprenant un bâti définissant une zone d'acquisition s'étendant sensiblement selon un plan, un organe d'acquisition qui est fixé au bâti pour avoir une face sensible formant la zone d'acquisition, et une unité de traitement reliée à l'organe d'acquisition pour traiter un signal provenant de celui-ci. L'utilisateur applique un doigt (ou plusieurs doigts simultanément ou successivement le cas échéant) contre la face sensible. Ce mode de fonctionnement est particulièrement lent et le doigt doit être immobile sans quoi l'acquisition de l'empreinte digitale ne peut être faite. De plus, dans certains cas et pour certaines personnes, la peau des doigts est particulièrement sèche et ne permet pas une acquisition de qualité suffisante pour garantir de bonnes performances sans attendre plusieurs dizaines de secondes. Enfin, les contacts des doigts sur le capteur l'encrassent, ce qui dégrade la qualité des images et demande donc un nettoyage périodique, et surtout sont perçus comme non hygiéniques par les utilisateurs.

Les systèmes avec contact ne permettent pas une acquisition d'images acceptables des paumes dans des conditions ergonomiques. En effet, pour obtenir une image de l'ensemble de la paume, il faut que celle-ci soit entièrement en contact avec la surface d'acquisition, ce qui n'est en général pas possible et requiert d'écraser fortement la main sur le dispositif.
Le document WO2007/050776 (UNIV KENTUCKY RES FOUND) décrit un dispositif d'acquisition d'image d'une empreinte d'au moins une partie d'une main d'un utilisateur, comprenant un bâti définissant une zone d'acquisition s'étendant sensiblement selon un plan, un organe optique d'acquisition qui est fixé au bâti pour avoir un champ couvrant la zone d'acquisition, et une unité de traitement reliée à l'organe d'acquisition pour traiter des signaux d'images générées séquentiellement par l'organe optique d'acquisition d'image. Le bâti est agencé pour ménager une zone d'espace libre qui contient la zone d'acquisition, des piges fixes étant positionnées dans la zone d'acquisition pour définir des calages latéraux de ladite partie de main afin de la maintenir immobile tout au long de l'acquisition de la séquence d'images. Des mires de différentes couleurs sont successivement projetées sur la main afin d'acquérir la succession d'images de la main et en déduire la forme de la partie de main.

Un but de l'invention est de proposer un moyen d'acquisition qui soit plus rapide que les dispositifs actuels tout en ayant une simplicité d'utilisation maximale.

A cet effet, on prévoit, selon l'invention, un dispositif d'acquisition d'images tel que défini dans la revendication 1.

Ce dispositif permet de réaliser une acquisition optique sans contact d'une partie de la main en mouvement, comme un ou plusieurs doigts ou la paume de la main. Les caractéristiques de l'organe optique d'acquisition assurent l'obtention d'images nettes de la partie de main se déplaçant au voisinage du plan d'acquisition (la profondeur du champ autorise une certaine tolérance de positionnement de la partie de main par rapport à ce plan). L'extraction des images monochromes du signal d'image couleur permet de disposer d'au moins deux images qui ont été prises simultanément (le mouvement de la partie de main rendrait particulièrement difficile un traitement automatique de plusieurs images prises successivement) et qui possèdent des caractéristiques différentes. Ces au moins deux images permettent, grâce au traitement réalisé par l'unité de traitement, l'obtention de toutes les informations nécessaires à l'identification (ces informations concernent par exemple les déviations locales des stries, la forme des contours des stries, la position des pores, les stries naissantes, la forme tridimensionnelle de la partie de main...). Dans le cas des doigts ces informations peuvent s'étendrent à la phalangine. Ce traitement permet en outre d'obtenir une résolution prédéterminée simplifiant les opérations ultérieures de comparaison des images d'empreintes. Il peut ainsi être avantageusement calculé une image déroulée de l'empreinte à une résolution connue, produisant une image comparable aux systèmes d'acquisition traditionnels, mais avec une surface agrandie.

De préférence, le champ de l'organe optique d'acquisition a une largeur suffisante pour que la zone d'acquisition couvre plusieurs doigts d'une même main de l'utilisateur.

Il est ainsi possible de réaliser simultanément l'acquisition d'une image montrant plusieurs doigts de l'utilisateur, ce qui permet de simplifier encore l'acquisition et de rendre les traitements plus fiables (ou plus robustes). Le module de traitement peut ainsi être agencée pour suivre les doigts dans la série d'image acquises, de les segmenter individuellement en 2D ou en 3D, de sélectionner la meilleure représentation de chaque doigt dans la séquence, voire de consolider un ensemble de représentations de chaque doigt. Dans le cas de l'acquisition d'une paume, le module de traitement peut être agencé permet de consolider les images afin d'obtenir la représentation 2D de la totalité de la surface de paume acquise et d'en reconstruire la totalité de la forme.

Avantageusement, l'organe de projection est fixé au bâti de manière à projeter la mire en direction d'une extrémité distale des doigts.

La projection n'engendre alors que peu ou pas d'ombre portée par un doigt sur son voisin, ombre qui risquerait d'altérer l'image en diminuant la quantité d'informations exploitables pour une identification.

Avantageusement, il est généré à partir de l'image de texture et la forme de la partie de main une nouvelle image déroulée, représentant l'image de l'empreinte à une même résolution en tout point.

Ceci est particulièrement intéressant pour les doigts. L'image déroulée est identique à l'image qui aurait été acquise avec un système d'acquisition par dit enroulé (systèmes où le doigt est roulé sur la surface d'acquisition pour restituer une image complète de l'empreinte).

Selon un mode de réalisation particulier, la mire comprend trois couleurs avec un éclairage uniforme de couleur vert et des motifs lumineux répétitifs dans les deux autres couleurs et, avantageusement, les motifs lumineux répétitifs sont en rouge et en bleu.

L'éclairage vert révèle la texture de l'empreinte de manière particulièrement efficace. En effet, les lumières de longueurs d'onde trop grande (rouge et infra-rouge) sont fortement diffusées à l'intérieur du doigt et procurent un contraste diminué. Une lumière de longueur d'onde plus courte (bleu) pose des problèmes d'acquisition, puisque les caméras y sont moins sensibles. En revanche, les caméras couleur usuelles possèdent plus de pixels verts que des autres couleurs, et cette couleur est donc préférable pour révéler les informations à haute fréquence de l'empreinte. Le motif répétitif est d'une période très supérieure à celle des lignes de l'empreinte pour ne pas introduire d'artéfacts dans l'image de l'empreinte.

De préférence, les motifs lumineux répétitifs sont des courbes en créneaux ou en sinusoïde s'étendant avantageusement perpendiculairement à la direction du mouvement et présentant un angle non nul avec l'axe de visé des systèmes d'acquisition.

Ce mode de réalisation est particulièrement robuste.

Selon une première caractéristique particulière, le bâti comprend un organe de guidage du mouvement du doigt de l'utilisateur qui comprend, de préférence, un écran translucide qui s'étend d'un côté de la zone d'acquisition opposé à l'organe optique d'acquisition et qui comporte au moins un repère de positionnement du doigt et, avantageusement, le dispositif peut comporter en plus un élément indicateur d'une vitesse nominale de déplacement de la main.

L'organe de guidage aide l'utilisateur à maintenir son doigt dans la zone d'acquisition tout en le déplaçant à une vitesse adéquate avec les capacités d'acquisition de l'organe optique d'acquisition.

Selon une deuxième caractéristique particulière, le dispositif comprend un organe d'éclairage en proche infra-rouge et un organe optique d'acquisition infrarouge est relié à l'unité de traitement pour lui transmettre un signal d'image infrarouge et l'unité de traitement est agencée pour extraire du signal d'image infrarouge une image infrarouge faisant ressortir un réseau veineux du doigt.

Par proche infrarouge, on entend des longueurs d'ondes comprises (entre 700 et 1000 nm). Ceci permet de détecter un faux doigt qui serait utilisé par un fraudeur et qui reproduirait l'empreinte digitale d'une autre personne mais dont le réseau veineux ne correspondrait pas à celui de la personne dont le doigt a été contrefait. En outre, le réseau veineux peut être utilisé pour confirmer le résultat d'une identification réalisée grâce à l'empreinte.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique en perspective d'un dispositif conforme à l'invention,
- la figure 2 est une vue schématique en coupe selon le plan II de la figure 1,
- la figure 3 est une vue schématique en coupe selon le plan III de la figure 1.

En référence aux figures, le dispositif d'acquisition d'images conforme à l'invention comprend un bâti 1 comportant un pupitre 2 surmonté d'un écran 3 qui s'étend parallèlement à une face supérieure 4 transparente du pupitre 2. La face supérieure 4 et l'écran 3 sont inclinés par rapport à l'horizontale d'un angle d'environ 45° de manière que l'écran 3 soit orienté vers un utilisateur qui ferait face au pupitre 2. La face supérieure 4 et l'écran 3 sont écartés d'une distance de quelques centimètres (par exemple cinq centimètres pour l'acquisition des empreintes des doigts, et huit pour celle des paumes) pour définir entre eux une zone d'espace libre 5 ouverte, ici frontalement et latéralement sur ses deux côtés, pour former un passage pour une main de l'utilisateur.

Le pupitre 2 renferme deux organes optiques d'acquisition, à savoir un organe optique d'acquisition principal, ici une caméra 6 couleur, et un organe d'acquisition additionnel, ici une caméra 7 infrarouge, qui sont montés dans le pupitre 2 pour avoir un champ couvrant une zone d'acquisition 8 qui est contenue en totalité dans la zone d'espace libre 5. La zone d'acquisition 8 est ici plus précisément au centre de la zone d'espace libre 5 et a un plan parallèle à la face supérieure 4. Le champ des caméras 6, 7 a une largeur suffisante pour que la zone d'acquisition 8 couvre plusieurs doigts d'une même main de l'utilisateur (ici index, majeur, annulaire, auriculaire). Les caméras 6 et 7 sont réglées pour avoir un champ ayant une profondeur s'étendant de part et d'autre de la zone d'acquisition 8. Les caméras 6 et 7 ont un capteur ayant une vitesse d'acquisition suffisamment élevée pour prendre une image d'une main en mouvement dans la zone d'acquisition avec une vitesse maximale de déplacement prédéterminée. Le capteur utilisé est par exemple un capteur de 1,3 millions de pixels avec une vitesse comprise entre 60 à 100 images par seconde.

Les caméras 6 et 7 sont reliées à une unité de traitement 9 pour transmettre à cette dernière des signaux d'image couleur et des signaux d'image infrarouge respectivement. L'unité de traitement 9 est ici un ordinateur exécutant un programme de traitement d'image.

Le bâti 1 contient également un organe de projection 10 d'une mire lumineuse en trois couleurs. L'organe de projection 10 est fixé au bâti en dessous de la trajectoire de passage des doigts et est dirigé vers la zone d'acquisition 8 couvrant ici l'avant des doigts où l'information d'empreinte est la plus discriminante. La mire comprend un éclairage uniforme de couleur vert, et des motifs lumineux répétitifs dans les deux autres couleurs, ici des courbes en créneaux ou en sinusoïde en rouge et en bleu qui s'étendent perpendiculairement à la direction du mouvement de la main. La mire est définie ici pour avoir une période moyenne sur le doigt de 70 à 80 pixels à 740 dpi.

Le bâti 1 contient également un organe de projection 14 d'un faisceau lumineux en proche infrarouge disposé dans l'exemple décrit ici, de façon analogue à l'organe de projection 10.

L'écran 3 comprend une partie centrale 3.1 translucide et fortement diffusante au niveau de la zone d'acquisition 8 et une partie périphérique 3.2 transparente. La partie centrale 3.1 peut être avantageusement dotée, d'une part, d'une lame de contraste (verre de densité neutre traité anti-reflet) en face supérieure et, d'autre part, d'un filtre bleu et d'un traitement anti-reflet en face inférieure. Des lignes 11 parallèles à la direction souhaitée du mouvement de la main sont dessinées sur l'écran 3 pour indiquer à l'utilisateur comment positionner sa main. En outre, l'écran 3 est pourvu d'un élément indicateur 12 d'une vitesse souhaitée de déplacement. L'élément indicateur 12 est ici un chenillard qui comporte des diodes électroluminescentes disposées selon une ligne parallèle aux lignes 11 et qui est programmé pour allumer successivement les diodes électroluminescentes à la vitesse souhaitée.

Le fonctionnement du dispositif va maintenant être décrit.

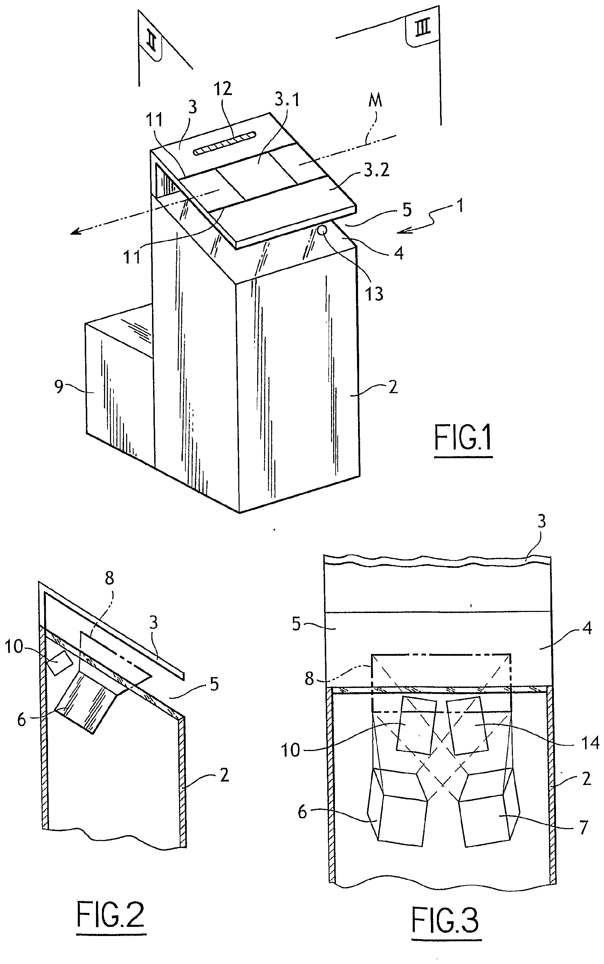

L'utilisateur souhaitant être identifié (ou authentifié) entre sa main dans la zone d'espace libre 5 par un côté de celle-ci et, tout en la maintenant entre les lignes repères 11, déplace sa main vers l'autre côté en respectant l'indication de vitesse procurée optionnellement par l'élément indicateur 12 (la direction du mouvement est notée M sur la figure 1, le mouvement dans le sens inverse est également accepté).

Un capteur 13, ici une barrière infrarouge, détecte l'entrée de la main dans la zone d'acquisition 8 et commande l'activation de l'organe de projection 10 et des caméras 6, 7. Un deuxième capteur peut être disposé de l'autre coté du bâti pour permettre de passer la main indifféremment dans un ou l'autre sens. Du fait de la position de l'organe de projection 10, la mire est projetée vers l'extrémité des doigts de façon à éviter que les doigts ne créent des ombres les uns sur les autres.

L'écran 3 et les organes de projection lumineuse sont agencés de telle façon que l'écran 3 intercepte toute la lumière projetée et empêche l'utilisateur de voir directement la lumière projetée. L'utilisateur ne voit que la lumière diffusée par l'écran 3, dont les caractéristiques d'absorption sont choisies de façon à produire une image clairement visible et non éblouissante. Au besoin, un petit cadre opaque peut être ajouté entre la zone centrale de l'écran et la zone latérale.

Les caméras 6, 7 transmettent alors des signaux d'images à l'unité de traitement 9.

Le programme exécuté par l'unité de traitement 9 est agencé pour extraire du signal d'image couleur transmis par la caméra 6 une image monochrome dans chacune des couleurs projetées (vert, rouge et bleu), reconstituer une texture de chaque doigt à partir de l'image verte et une forme de chaque doigt à partir d'au moins une autre des images monochromes (c'est-à-dire ici l'image rouge et l'image bleue). Chaque doigt ou paume est ainsi reconstitué et il est possible d'en retirer une image à une résolution adaptée aux comparaisons qui seront réalisées par la suite avec les empreintes mémorisées dans la base de données utilisées pour l'identification. Ces images adaptées sont issues d'une remise à l'échelle globale d'une ou plusieurs des images acquises ou de leur consolidation et/ou sont issues de la remise dans le plan de la texture de peau à partir des informations tridimensionnelles issues des images acquises ou de leur consolidation. D'autres méthodes de remise à plat sont connues, comme celle décrite dans l'article « 3D Touchless fingerprints compatibility with legacy rolled images », Y. Chen et al In Biometric Consortium Conference, Aug. 21 2006 Page(s):1 - 6. Cette phase de comparaison est réalisée de manière classique et n'est pas ici détaillée. Elle pourra utiliser une des deux méthodes de remise à résolution ou les deux méthodes simultanément.

Le signal d'image infrarouge transmis par la caméra 7 permet d'établir une image du réseau veineux. Cette image est utilisée pour vérifier que des faux doigts ne sont pas utilisés (on aurait alors une image ne comportant pas de réseau veineux) et, après identification de l'utilisateur à partir des empreintes digitales, de vérifier que les réseaux veineux des doigts du titulaire enregistré dans la base sont bien les mêmes que ceux des doigts de l'utilisateurs, renforçant ainsi la fiabilité de l'identification par l'ajout d'une vérification supplémentaire (sans ralentir notablement l'identification).

Si une image du pouce est également nécessaire, l'utilisateur est invité à déplacer son pouce dans la zone d'acquisition comme il l'a fait précédemment pour les autres doigts. Le traitement est identique.

Bien entendu, l'invention n'est pas limitée au mode de réalisation décrit mais englobe toute variante entrant dans le cadre de l'invention telle que définie par les revendications.

En particulier, la structure du dispositif de l'invention, et notamment la forme du bâti, peut être différente de celle décrite. La zone d'espace libre peut n'être ouverte que frontalement, l'utilisateur avançant puis reculant sa main pour l'acquisition. Le dispositif peut comprendre des moyens de guidage autres que l'écran 3, et par exemple des moyens sonores.

Le nombre des faisceaux lumineux projetés pour former la mire peuvent être différents de ceux décrits. Deux faisceaux lumineux de couleurs différentes sont ainsi utilisables au lieu des trois du mode de réalisation décrit. L'un des motifs répétitifs peut servir de référence de positionnement de l'autre motif répétitif, les motifs répétitifs peuvent avoir des fréquences identiques ou différentes. Dans le cas où un seul motif répétitif est utilisé pour la mire, la mire comporte avantageusement un élément particulier - ligne plus large, variation brusque de phase ou de fréquence - permettant à l'unité de traitement d'identifier chaque ligne dans l'image pour faciliter la reconstruction de forme. L'utilisation de deux motifs de couleur peut permettre de trouver des particularités dans l'image (utilisation d'une très basse fréquence telle que deux périodes ne puissent être confondues étant donné le volume d'acquisition ; utilisation du déphasage entre les deux images...). Un faisceau lumineux en une seule couleur peut être agencé pour contenir pour partie une zone uniforme permettant d'obtenir la texture et une zone contenant un motif répétitif. Un ou plusieurs autres faisceaux lumineux peuvent comporter les mêmes types de zones de manière complémentaire, ce qui permet de reconstituer un motif répétitif et un éclairage uniforme sur toute la surface illuminée. Le système de projection peut comporter une ou deux voies de projection, séparant les moyens d'éclairage uniforme en vert des moyens de projection des motifs répétitifs en rouge et bleu.

Il peut être ajouté une ou plusieurs sources d'éclairage additionnelles au système de projection pour éclairer les côtés et le bout du doigt.

L'élément indicateur de vitesse est optionnel.

L'activation des caméras et de l'organe de projection peut être effectuée par appui sur un bouton de commande.

La caméra infrarouge ainsi que son système d'illumination sont facultatifs. Dans tous les cas, l'information infrarouge n'étant de toute façon pas prépondérante dans le système, on maintiendra le système d'acquisition principal dans l'axe pour conserver la meilleure qualité d'image possible pour le système s'acquisition principal.

Une deuxième caméra permettant d'augmenter la surface imagée (sur les côtés du doigt) peut être ajoutée pour améliorer la qualité des empreintes reconstruites sur les bords du doigt, et se rapprocher de la qualité des images acquises sur les systèmes d'acquisition policiers fonctionnant par roulement du doigt sur la surface d'acquisition.

L'organe de projection peut fonctionner de manière continue ou par flash en synchronisation avec le capteur des caméras. L'utilisation par flash peut avantageusement améliorer l'acquisition d'images de doigts en mouvement rapide et permettre d'augmenter la profondeur de champ du système d'imagerie et donc le volume d'acquisition.

Avantageusement, l'unité de traitement d'images est agencée pour réaliser une étape de segmentation des doigts, de suivi de ces derniers d'une image à l'autre, de sélection des meilleures images ou portions d'images pour chaque doigt, optionnellement de consolidation en deux ou trois dimensions des images ou portions d'images sélectionnées pour chaque doigt, de mise en état adapté aux comparaisons avec la base, et d'amélioration des images.

Le système peut donc effectuer les tâches suivantes :
- attente du déclenchement de la caméra (typiquement par détection infrarouge de présence) ou acquisition en boucle d'images,
- pour chaque image, segmentation des doigts dans l'image (en 2D ou en 3D).
- suivi des formes segmentées d'image en image pour chaque doigt, sélection des meilleures images pour chaque doigt (en 2D ou en 3D),
- Si le défilement des doigts est fini, arrêt des acquisitions,
- lorsque le défilement des doigts est fini, s'il a été sélectionné plusieurs images pour ce doigt, consolidation des images en 2D ou 3D,
- élaboration d'une image finale pour chaque doigt, avec remise à l'échelle,
- exploitation de l'image ainsi élaborée pour l'identification.

L'information en trois dimensions (forme des doigts) peut, pour des raisons de performance, n'être calculée qu'au besoin. Ainsi, les traitements de segmentation et de suivi des doigts peuvent se faire en temps réel en n'utilisant que peu de ressources processeur.

En pratique, le système peut être réglé de façon à pouvoir acquérir des images d'une main en mouvement très rapide (plus d'un mètre par seconde) pour éviter de devoir indiquer à l'utilisateur la vitesse optimale de passage.

## Revendications

1. Dispositif d'acquisition d'images d'une empreinte d'au moins une partie d'une main d'un utilisateur, alors que ladite partie de main est en mouvement, comprenant un bâti définissant une zone d'acquisition s'étendant sensiblement selon un plan, un organe optique d'acquisition qui est fixé au bâti pour avoir un champ couvrant la zone d'acquisition, et une unité de traitement reliée à l'organe d'acquisition pour traiter un signal d'image provenant de celui-ci, **caractérisé en ce que** :
- le bâti est agencé pour ménager une zone d'espace libre qui contient la zone d'acquisition et qui forme un passage pour ladite partie de la main en mouvement parallèlement au plan,
- le dispositif comprend au moins un organe de projection, dans la zone d'acquisition, d'une mire lumineuse comprenant un éclairage uniforme de couleur vert et un motif lumineux répétitif en une autre couleur, ce motif répétitif ayant une période supérieure à celle des lignes de l'empreinte pour ne pas introduire d'artéfact dans une image de l'empreinte acquise ;
- l'organe optique a une profondeur de champ s'étendant de part et d'autre de la zone d'acquisition et possède un capteur couleur ayant une vitesse d'acquisition suffisante pour capturer au moins une image couleur de ladite partie de la main en mouvement selon une vitesse maximale de déplacement prédéterminée,
- l'unité de traitement est agencée pour extraire du signal d'image couleur une image monochrome dans chacune des couleurs projetées, reconstituer une texture de ladite partie de la main à partir de l'image monochrome de couleur vert et une forme à partir de l'image monochrome de ladite une autre couleur.

2. Dispositif selon la revendication 1, dans lequel le champ de l'organe optique d'acquisition a une largeur suffisante pour que la zone d'acquisition couvre plusieurs doigts d'une même main de l'utilisateur.

3. Dispositif selon la revendication 1 ou 2, dans lequel le ou les organes de projections sont fixés au bâti de manière à projeter la mire en direction d'une extrémité distale des doigts.

4. Dispositif suivant la revendication 1, dans lequel le système utilise un dispositif d'éclairage uniforme en vert, et un organe de projection de mire dans ladite une autre couleur.

5. Dispositif selon l'une quelconque des revendications précédentes, dans lequel le motif lumineux répétitif est une courbe en créneaux ou en sinusoïde.

6. Dispositif selon la revendication 5, dans lequel la courbe en créneaux ou en sinusoïde s'étend perpendiculairement à la direction du mouvement et présente un angle non nul avec l'axe de visée des systèmes d'acquisition.

7. Dispositif selon la revendication 1, dans lequel le bâti comprend un organe de guidage du mouvement du doigt de l'utilisateur.

8. Dispositif selon la revendication 7, dans lequel l'organe de guidage comprend un écran translucide qui s'étend d'un côté de la zone d'acquisition opposé à l'organe optique d'acquisition et qui comporte au moins un repère de positionnement du doigt.

9. Dispositif selon la revendication 7, dans lequel l'organe de guidage est pourvu d'un élément indicateur d'une vitesse de déplacement prédéterminée.

10. Dispositif selon la revendication 1, comprenant un organe d'éclairage en proche infrarouge et un organe optique d'acquisition infrarouge relié à l'unité de traitement pour lui transmettre un signal d'image infra-rouge et l'unité de traitement est agencée pour extraire du signal d'image infrarouge une image infrarouge faisant ressortir un réseau veineux du doigt.

11. Dispositif selon la revendication 1, dans lequel le plan de la zone d'acquisition est incliné par rapport à l'horizontale.

12. Dispositif selon la revendication 1, dans lequel l'unité de traitement est agencée pour générer à partir de la texture et la forme de la partie de main une image déroulée, représentant l'image de l'empreinte à une même résolution en tout point.

## Patentansprüche

1. Vorrichtung zur Erfassung von Bildern eines Abdrucks mindestens eines Abschnittes einer Hand eines Nutzers, während der genannte Handabschnitt in Bewegung ist, umfassend ein Gestell, das eine Erfassungszone definiert, die sich im Wesentlichen in einer Ebene erstreckt, ein optisches Erfassungsorgan, das an dem Gestell befestigt ist, um ein Feld zu haben, das die Erfassungszone abdeckt, sowie eine Verarbeitungseinheit, die mit dem Erfassungsorgan verbunden ist, um ein aus diesem stammendes Bildsignal zu verarbeiten, **dadurch gekennzeichnet, dass**:
- das Gestell so ausgebildet ist, dass es eine Zone eines freien Raums ausbildet, die die Erfassungszone enthält und die einen Durchgang für den genannten sich parallel zur Ebene bewegenden Abschnitt der Hand bildet,
- die Vorrichtung mindestens ein Projektionsorgan zur Projektion eines Leuchttestbildes in die Erfassungszone umfasst, das eine gleichmäßige Beleuchtung in grüner Farbe und ein sich wiederholendes Lichtmuster in einer anderen Farbe umfasst, wobei dieses sich wiederholende Muster eine Periode hat, die größer als die der Linien des Abdrucks ist, um in einem Bild des erfassten Abdrucks keine Artefakte einzuführen;
- das optische Organ eine Schärfentiefe hat, die sich zu beiden Seiten der Erfassungszone erstreckt, und einen Farbsensor besitzt, der eine Erfassungsgeschwindigkeit hat, die ausreicht, um mindestens ein Farbbild des genannten sich gemäß einer vorgegebenen maximalen Bewegungsgeschwindigkeit bewegenden Abschnittes der Hand zu erfassen,
- die Verarbeitungseinheit so ausgebildet ist, dass sie aus dem Farbbildsignal ein monochromes Bild in jeder der projizierten Farben extrahiert, eine Textur des genannten Abschnittes der Hand anhand des monochromen Bildes in grüner Farbe rekonstruiert und eine Form anhand des monochromen Bildes der genannten anderen Farbe rekonstruiert.

2. Vorrichtung nach Anspruch 1, bei der das Feld des optischen Erfassungsorgans eine Breite hat, die ausreicht, damit die Erfassungszone mehrere Finger einer selben Hand des Nutzers abdeckt.

3. Vorrichtung nach Anspruch 1 oder 2, bei der das bzw. die Projektionsorgane derart an dem Gestell befestigt sind, dass sie das Testbild in Richtung eines distalen Endes der Finger projizieren.

4. Vorrichtung nach Anspruch 1, bei der das System eine Vorrichtung zur gleichmäßigen Beleuchtung in grüner Farbe verwendet, sowie ein Projektionsorgan zur Testbildprojektion in der genannten anderen Farbe.

5. Vorrichtung nach einem der vorhergehenden Anspruche, bei der das sich wiederholende Lichtmuster eine Rechteck- oder Sinuskurve ist.

6. Vorrichtung nach Anspruch 5, bei der sich die Rechteck- oder Sinuskurve senkrecht zur Richtung der Bewegung erstreckt und mit der Visierachse der Erfassurtgssysteme einen Winkel ungleich Null aufweist.

7. Vorrichtung nach Anspruch 1, bei der das Gestell ein Führungsorgan zum Führen der Bewegung des Fingers des Nutzers umfasst.

8. Vorrichtung nach Anspruch 7, bei dem das Führungsorgan einen lichtdurchlässigen Bildschirm umfasst, der sich auf einer Seite der Erfassungszone gegenüber dem optischen Erfassungsorgan erstreckt und mindestens eine Positionsmarkierurlg für den Finger umfasst.

9. Vorrichtung nach Anspruch 7, bei der das Führungsorgan mit einem Anzeigeelement zum Anzeigen einer vorgegebenen Bewegungsgeschwindigkeit versehen ist.

10. Vorrichtung nach Anspruch 1, umfassend ein Beleuchtungsorgan zur Beleuchtung im nahen Infrarot und ein optisches Erfassungsorgan zur Erfassung von Infrarot, das mit der Verarbeitungseinheit verbunden ist, um ihr ein Infrarotbildsignal zu übertragen, und die Verarbeitungseinheit so ausgebildet ist, dass sie aus dem Infrarotbildsignal ein Infrarotbild extrahiert, das ein Venennetz des Fingers zum Vorschein bringt.

11. Vorrichtung nach Anspruch 1, bei der die Ebene der Erfassungszone in Bezug auf die Horizontale geneigt ist.

12. Vorrichtung nach Anspruch 1, bei der die Verarbeitungseinheit so ausgebildet ist, dass sie anhand der Textur und der Form des Handabschnittes ein abgewickeltes Bild erzeugt, welches das Bild des Abdrucks mit einer gleichen Auflösung in jedem Punkt darstellt.

## Claims

1. Device for acquiring images of a print of at least a part of a hand of a user while said part of the hand is in motion, comprising a stand defining an acquisition zone extending substantially in a plane, an optical acquisition member which is fixed to the stand to have a field covering the acquisition zone, and a processing unit connected to the acquisition member for processing an image signal coming from the latter, **characterised in that**
- the stand is arranged to provide an empty space zone which contains the acquisition zone and which forms a passage for said part of the hand while it is moving parallel to the plane,
- the device includes at least one member for projecting, in the acquisition zone, an illuminated pattern comprising uniform green-coloured illumination and a repetitive illuminated motif of another colour, this repetitive motif having a period greater than that of the lines of the print in order not to introduce any artefacts into an image of the print which is acquired,
- the optical member has a depth of field extending to both sides of the acquisition zone and has a colour sensor having a speed of acquisition sufficient to capture at least one colour image of said part of the hand while it is moving at a predetermined maximum speed of displacement,
- the processing unit is arranged to extract from the colour image signal a monochrome image in each of the colours projected, to reconstitute a texture of said part of the hand from the green-coloured monochrome image and a shape from the monochrome image of said another colour.

2. Device according to claim 1, wherein the field of the optical acquisition member is of a width sufficient for the acquisition zone to cover a plurality of fingers of the same hand of the user.

3. Device according to claim 1 or 2, wherein the projection member or members are fixed to the stand in such a way to project the pattern in the direction of a distal end of the fingers.

4. Device according to claim 1, wherein the system uses a device for uniform illumination in green and a projection member for pattern projection in said another colour.

5. Device according to any one of the preceding claims, wherein the repetitive illuminated motif is a square-wave or sinusoidal curve.

6. Device according to claim 5, wherein the square-wave or sinusoidal curve extends perpendicularly to the direction of the motion, and makes a non-zero angle with the optical axis of the acquisition systems.

7. Device according to claim 1, wherein the stand comprises a member for guiding the motion of the user's finger.

8. Device according to claim 7, wherein the guiding member comprises a translucent screen which extends on an opposite side of the acquisition zone from the optical acquisition member and which comprises at least one reference mark for positioning the finger.

9. Device according to claim 7, wherein the guiding member is provided with a member indicating a predetermined speed of displacement.

10. Device according to claim 1, comprising a member for illumination in the near infrared and a member for infrared optical acquisition connected to the processing unit to transmit thereto an infrared image signal, and the processing unit is adapted to extract from the infrared image signal an infrared image revealing venous network of the finger.

11. Device according to claim 1, wherein the plane of the acquisition zone is inclined relative to the horizontal.

12. Device according to claim 1, wherein the processing unit is arranged to generate from the texture and shape of the part of the hand a rolled-out image which represents the image of the print at the same resolution at all points.
